Europäisches Patentamt

European Patent Office

Office européen des brevets

(11) Publication number: **0 234 182**
**A1**

# (12) EUROPEAN PATENT APPLICATION

(21) Application number: 87100008.9

(51) Int. Cl.⁴: **G06F 15/16**

(22) Date of filing: 02.01.87

(30) Priority: 24.02.86 US 831885

(43) Date of publication of application:
02.09.87 Bulletin 87/36

(84) Designated Contracting States:
DE FR GB IT

(71) Applicant: **International Business Machines
Corporation
Old Orchard Road
Armonk, N.Y. 10504(US)**

(72) Inventor: **Blevins, Ballard John
260 E. Reynolds Road
Lexington Kentucky 40503(US)**
Inventor: **Kulpa, William Gary
11502 Titian Drive
Austin Texas 78728(US)**
Inventor: **Mathis, Joseph Richard
725 Shady Hollow Drive
Georgetown Texas 78628(US)**

(74) Representative: **Hobbs, Francis John
IBM United Kingdom Limited Intellectual
Property Department Hursley Park
Winchester Hampshire SO21 2JN(GB)**

(54) A multiprocessor data processing system.

(57) In a multiprocessor data processing system, the sequential access portion (31b) of a memory (31) associated with one processor (P1) is connected to the sequential access portion (41b) of a memory (41) associated with another processor (P2) in such a way, via driver/receivers (34, 44) and a channel (51a), that data can flow between the sequential access portions asynchronously of the remainder of the system. Each of the memories (31, 41) also comprises a random access portion (31a, 41a) which is accessible by its associated processor via a conventional random access port and means to transfer data between its random access portion and its sequential access portion. Data flow operations between the sequential access portions of the memories is controlled by control means (32, 42) connected to the channel and via system buses (33, 43) to the processors (P1, P2).

FIG. 3

# A MULTIPROCESSOR DATA PROCESSING SYSTEM

This invention relates to a multiprocessor data processing system.

One mechanism that is frequently used to increase the processing capability of a data processing system including a single processor is the addition of a second or third processor, commonly termed multiprocessing. This increases the number of computer instructions per second available to apply to a data processing task. The interconnection channel between the processors typically will consist of a parallel bus, with the transfer being storage-to-storage in nature. Frequently the transfer will be the movement of large "blocks" of data from the storage of one processor to the storage of another processor. The data rate of this transfer is of major concern; if it is too slow, the full advantage of multiprocessing is not achieved; if it is too fast, it will tend to stop effective processing in both processors and impact any time dependent operations such as I/O devices, interrupt processing, etc.

One of the problems associated with a multiprocessing system is that the system designer must carefully balance the transfer speed and block size of the processor-to-processor transfer such that neither processor is "locked out" during the transfer, while getting maximum benefit from the additional processors.

In a typical multiprocessing system structure including a storage subsystem in each processor, access to the storage subsystem of each processor is through a common address and data bus. Thus, all transfers between processors will directly reduce the available storage bandwidth, and hence never obtain the maximum potential benefit inherent in the multiprocessor system structure. Any "lock out" and reduced processing capability may increase interrupt latency beyond desirable or acceptable limits.

In a conventional prior art multiprocessor system which includes two processor subsystems, each including a processor, a storage unit and a system bus, and a processor-to-processor channel, data is transferred between the processor subsystems. Neglecting initialisation and transfer ending service, the data transfer sequence can be subdivided into three phases as follows:

1. In the first phase of the operation data is read from the storage unit of the first processor and transferred to its associated interface network. During this phase, the first processor is prohibited from accessing its system bus.

2. In the second phase of the operation the data is transferred over the processor-to-processor channel.

3. In the third phase of the operation the data is written into the storage unit of the second processor. During this phase, the second processor is prohibited from accessing its system bus.

If the system is designed to maximise the processor-to-processor transfer rate, then both processors will be prohibited from accessing their internal busses during all three phases of the operation for the duration of the block block. Both processors will be locked out of their respective storage units, and thus stopped from executing instructions during the transfer.

The system can be designed to distribute the interference over a period of time. Access to each storage unit by the processor-to-processor interface network may be interleaved with other activity within the respective system, such as instruction fetching or direct memory access (DMA) traffic, for example. In this environment, the processors will be stopped only during phases 1 and 3, respectively. Thus, instruction execution would continue, but at a reduced rate. Compared with the previous example, the interference will occur over a longer period of time with the accumulated or total interference being greater due to the asynchronous nature of the two activities (instruction execution and the transfer operation) and losses due to repeated arbitration at the internal system bus.

In each example, interference to the processor is directly proportional to the amount of data transferred.

The present invention seeks to provide an improved multiprocessor system in which data can be transferred between the processors more efficiently.

A multiprocessor data processing system includes a pair of data processing units each comprising a processor; a data storage unit operatively associated with the processor, the storage unit comprising a first dynamic RAM portion accessible via a conventional random access port and a second portion accessible via a sequential access port, and data transfer means to transfer data between the two portions; the processor being arranged and connected to communicate synchronously with the first portion of the data storage unit via its conventional random access port; the system being characterised, according to the invention, by further including data transfer means connecting the sequential access portions of the memories to one another to permit data flow therebetween; and control means for controlling data flow operations between the sequential access portions of the storage devices asynchronously of the remainder of the system.

The invention will now be described with reference to the accompanying drawings, in which:

Fig. 1 is a block diagram showing a known multiprocessor data processing system,

Fig. 2 is a schematic representation of a video RAM subsystem employed in a multiprocessor system embodying the present invention,

Fig. 3 is a block diagram of a multiprocessor data processing system embodying the present invention, and

Fig. 4 is a timing diagram illustrating the transfer of data between two sequential access video RAM elements utilised in the multiprocessor system illustrated in Figure 3.

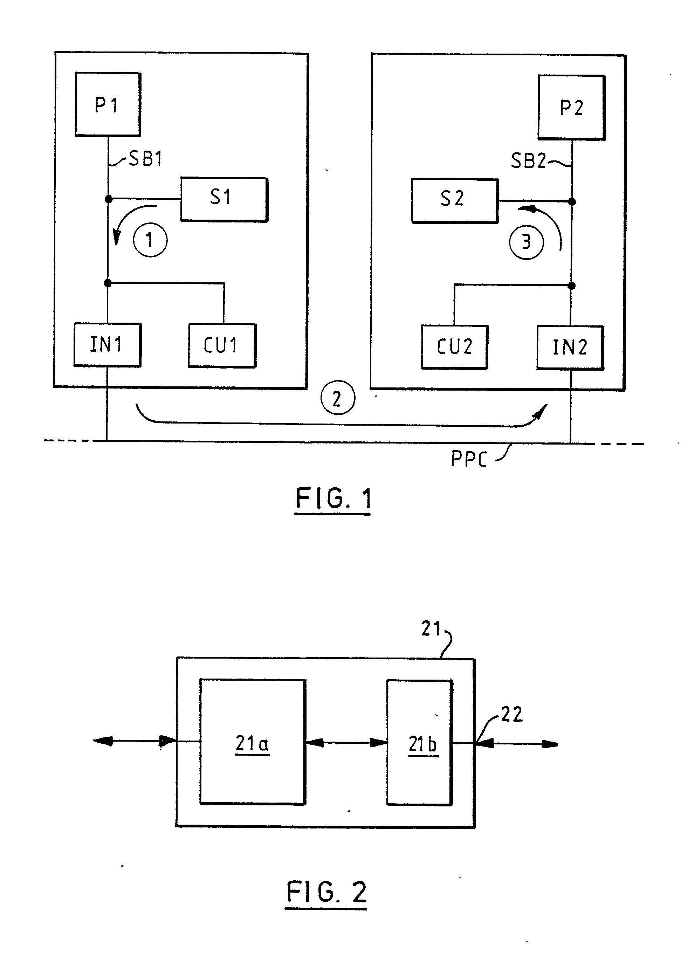

The multiprocessor system illustrated in Figure 1 is a practical embodiment of the prior art system referred to above. The first processor subsystem comprises a data processor P1, a storage unit S1, a system bus SB1, an interface network IN1 and a control unit CU1. The second processor subsystem comprises a data processor P2, a storage unit S2, a system bus SB2, an interface network IN2 and a control unit CU2. The two processor subsystems are connected by a processor-to-processor channel PPC which also connects to other processor subsystems. The system operates as described above and has the disadvantages detailed above.

The present invention is directed to an efficient mechanism to interconnect processors in a multiprocessor system in order to permit the transfer of data and control information without the large impacts on processor performance usually associated with this operation. Described below is the definition and implementation of an improved communication channel for the interconnection of processors within a multiprocessor data processing system.

The communication channel involved in the multiprocessor system to be described is based on the video random access memory (VRAM) storage technology. The video RAM is a dynamic RAM which provides access to a "word" shift register internal to the chip through a serial port. Thus, the video RAM provides two data ports, the conventional random access port of a dynamic RAM and the serial or sequential access port unique to the video RAM. Video RAMs are currently available from Texas Instruments as part No. TMS4161. The Texas Instrument memory is described in the "Supplement To MDS Memory Data Book 1984" in a section entitled "Dual Port Memory With High Speed Serial Access," pages 5-3 to 5-10.

By assembling the video RAMs into a parallel structure storage unit of N bits (where N = 8, 16, 32...), the serial port takes on the attributes of a sequentially accessible port of width N. As shown in Fig. 2, the storage unit 21 for each processor subsystem can be viewed as two independent RAMs, a "low" speed random access RAM 21a and a smaller "high" speed sequential access RAM 21b.

A multiprocessing system communication channel can be constructed by connecting the data bus of the channel to the sequential access port 22 of the video RAM of each processor subsystem. Such an arrangement will have the following desirable attributes. There will be zero interference to either processor during the time of the actual data transfer. Both processors are in a state of near 100% availability for the execution of any application or I/O task. This is in contrast to the lock out or reduced instruction execution of a conventional system in the prior art examples described above. The involvement of the processor for set up and end-of-transmission service is dependent on a given implementation and can be as low as 10-20 instructions.

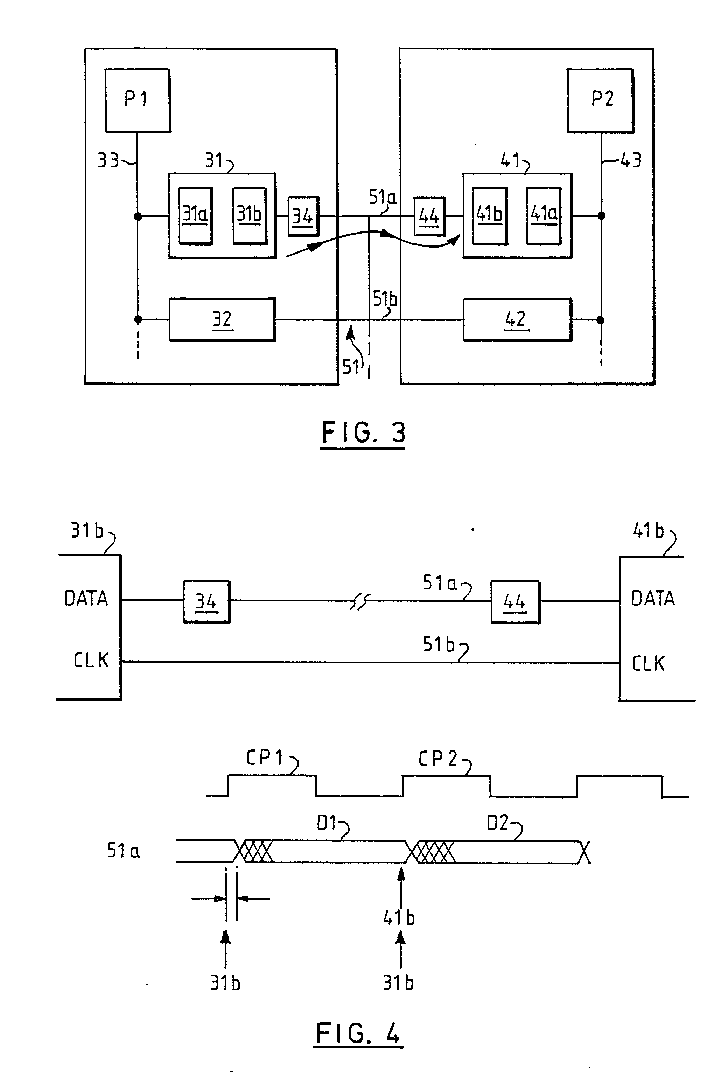

Fig. 3 is a block diagram showing the data flow for a processor-to-processor transfer utilising the video RAM storage unit structure illustrated in Figure 2. The following describes one possible sequence of events to effect a message (data) transfer from the storage 31 associated with a processor P1 of a first processor subsystem, comprising a random access RAM 31a and a sequential access RAM 31b, to the storage 41 associated with a processor P2 of a second processor subsystem, comprising a random access RAM 41a and a sequential access RAM 41b. The message may consist of multiple "blocks" of data with a "block" being equal to the number of bits in the sequential access RAM 21b of Fig. 2. The operation would proceed as follows:

1. A task being executed in P1 which requires the transfer of information to P2 will cause the sequential access RAM 31b to be loaded with the appropriate data block from the random access RAM 31a and inform a channel control network 32 to transfer the information.

2. The channel control network 32 using the appropriate signalling protocol will request use of a processor-to-processor channel 51 and establish a communication link with a channel control network 42 of processor P2 through a link 51b.

3. Once the communication link between the channel control networks 32 and 42 is established, data can then be clocked through a driver/receiver 34 out of the sequential RAM 31b, through a driver/receiver 44 and into the sequential RAM 41b, using a link designated 51a in Fig. 3 and employing the protocol required by the video RAM.

3

4. Once the entire contents of the sequential access RAM. 31b (a "block" of data) have been transferred into sequential access RAM 41b, the operation of movement of data on the channel will be suspended. This will provide time for the channel control network 42 of processor P2 to transfer the contents of the sequential access RAM 41b into the random access RAM 41a, requiring one access at the random access port of the video RAM using the appropriate video RAM protocol and then prepare to receive another "block" of data. At the same time, channel control network 32 of processor P1 will transfer the next "block" of data from the random access RAM 31a into the sequential access RAM 31b, requiring one access at the random access port of the video RAM using the appropriate video RAM protocol in preparation for the next transfer of data over the channel. The data transfer over the channel will be controlled through the protocol of the channel. If this is the last data "block" of the message to be transferred over the channel, the operation will be terminated by the control network 32 of processor P1; otherwise it will continue as described above.

As shown in Fig. 3, data is transferred between the sequential access RAM ports of the respective video RAMs and does not utilise either the internal system bus 33 of processor P1 or the internal system bus 43 of processor P2. Access to the system buses 33 or 43 is required only during the transfer of data internal to the video RAMs and is limited to one storage cycle per sequential access RAM transfer. Depending on the implementation, the availability of the system for instruction processing and other I/O activity can be as much as 99%. For example, in a system utilising a 32 bit processor-to-processor channel 51 and a 100 ns data clock, a continuous rate of 40 M bytes/sec can be sustained while encountering a total interference of less than 1%, as shown in Table 1 below.

It should also be noted that during the actual transfer of data, the processor-to-processor channel 51 can operate in a synchronous manner and an asynchronous manner to either of the respective processors. The transfer of data out of storage unit 31 and into storage unit 41 can operate under the control of a single clock pulse, as shown in Fig. 4. A first pulse CP1 initiates read out of sequential access RAM 31b to supply a block of valid data D1 to link 51a. The next clock pulse CP2 initiates writing of the block of data into the other sequential access RAM 41b and initiates the read out of another block of valid data D2 to link 51a. This greatly simplifies the control networks 32 and 42 as compared with a conventional transfer mechanism. The operation is required to synchronise to the respective processor clocks at the time instants when access to the random access ports of storage units 31a and 41a is required.


Table 1

Interference calculations

Assumptions:

1. Processor-to-processor transfer rate is

100 nS / Transfer
2. Transfer word size = 4 bytes (32 bits)
3. The random access RAM to/from sequential access RAM transfers size of 256 words (or 1024 bytes)
4. A storage access cycle = 250 nS

4

$$\text{Transfer Rates} = \frac{4 \text{ Bytes}}{\text{Transfer}} \quad x \quad \frac{\text{Transfer}}{100 \text{ nS}}$$

$$= \quad 40 \text{ M Bytes } / \text{ sec}$$

$$\text{Interference} \quad = \quad \frac{250 \text{ nS}}{\text{Stg Cycle}} \quad x \quad \frac{\text{Stg Cycle}}{(100) \ x \ (256)}$$

$$x \ 100\%$$

$$= \ .9766\%$$

## Claims

1. A multiprocessor data processing system includes a pair of data processing units each comprising a processor (10); a data storage unit operatively associated with the processor, the storage unit comprising a first dynamic RAM portion (21a) accessible via a conventional random access port and a second portion - (21b) accessible via a sequential access port (23), and data transfer means to transfer data between the two portions; the processor being arranged and connected (33) to communicate synchronously with the first portion of the data storage unit via its conventional random access port; the system being characterised by further including data transfer means (34, 44, 51a) connecting the sequential access portions of the memories to one another to permit data flow therebetween; and
control means (32, 42) for controlling data flow operations between the sequential access portions of the storage devices asynchronously of the remainder of the system.

2. A system as claimed in Claim 1, in which each of the data processing units includes a system bus - (33, 43) and means to connect the system bus to its storage unit when data is to be transferred between the random access portion of the storage unit and its associated sequential access portion.

3. A system as claimed in Claim 2, in which the data flow between the sequential access portions of the storage units occurs independently of the system buses.

4. A system as claimed in any preceding Claim, in which the data transfer means comprises means for clocking the data flow between the sequential access portions of the storage units asynchronously of the remainder of the system.

$$\underline{\text{FIG. 1}}$$

$$\underline{\text{FIG. 2}}$$

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 107 010 (TEXAS INSTRUMENTS INC.) * Page 6, line 22 - page 9, line 16; page 26, line 29 - page 27, line 18; page 29, lines 1-23 * | 1-4 | G 06 F 15/16 |
| A | WO-A-8 302 180 (WESTERN ELECTRIC CO. INC.) * Figure 1; page 5, line 23 - page 8, line 16 * | 1 | |
| A | EP-A-0 094 177 (DIGITAL EQUIPMENT CORP.) * Figure 1; page 11, line 16 - page 12, line 5; page 36 * | 1 | |
| A | EP-A-0 111 840 (HITACHI LTD) * Figure 5; page 7, line 17 - page 8, line 2 * | 1 | TECHNICAL FIELDS SEARCHED (Int. Cl.4) G 06 F G 09 G |

The present search report has been drawn up for all claims

| Place of search | Date of completion of the search | Examiner |
|---|---|---|
| THE HAGUE | 14-05-1987 | TIBAUX M.J.P.G. |